# EUROPÄISCHE PATENTSCHRIFT

(11) **EP 1 932 418 B1**
(45) Veröffentlichungstag und Bekanntmachung des Hinweises auf die Patenterteilung: **02.12.2009**
(21) Anmeldenummer: 07024327.4
(22) Anmeldetag: 14.12.2007
(51) Int. Cl.: A01D 89/00

(54) **Erntevorsatzvorrichtung zum Aufnehmen von am Boden liegendem Erntegut**
Harvesting device for collecting harvested crops from the ground
Dispositif accessoire de récolte destiné à ramasser les récoltes au sol

(30) Priorität: 15.12.2006 DE 202006019069 U; 12.04.2007 DE 102007017551
(43) Veröffentlichungstag der Anmeldung: 18.06.2008
(73) Patentinhaber: CLAAS Saulgau GmbH, 88348 Bad Saulgau (DE)
(72) Erfinder: Boll, Ulrich, 88348 Bad Saulgau (DE)
(74) Vertreter: Roth, Klaus

(56) Entgegenhaltungen:
- EP-A- 1 504 650
- FR-A- 2 772 228
- FR-A- 2 781 118
- FR-A- 2 864 425

## Beschreibung

Die Erfindung betrifft eine Erntevorsatzvorrichtung zur frontseitigen Anordnung an einem landwirtschaftlichen Fahrzeug und zum Aufnehmen von am Boden liegendem Erntegut wie Gras, Heu, Stroh, Silage, Luzerne oder dergleichen nach dem Oberbegriff des Anspruchs 1.

Derartige Vorrichtungen werden üblicherweise als sogenannte "Pick-Up" bezeichnet. Sie sind bei landwirtschaftlichen Maschinen im Einsatz, die am Boden liegendes Erntegut, wie Gras, Heu, Stroh, Silage, Luzerne oder dergleichen, aufnehmen und weiterverarbeiten. So sind beispielsweise sogenannte Ladewagen, Ballenpressen oder auch Feldhäcksler, die dergleichen Erntegut vom Boden aufnehmen, mit einer solchen "Pick-Up" ausgestattet (siehe e.g. EP 1 504 650 A).

Bei handelsüblichen Aufnahmevorrichtungen sind mehrere Reihen von um eine Drehachse umlaufenden Förderzinken als Aufnahmeelemente vorgesehen, die über das zugehörige Fahrzeug angetrieben werden. Die Antriebswelle des Fahrzeugs befindet sich neben der Bahnkurve der Förderzinken, so dass das Antriebsmoment auf die Förderzinken über ein Transmissionsgetriebe übertragen werden muss.

Bei den bekannten Aufnahmevorrichtungen liegt die Transmission des Antriebs außenseitig außerhalb der Arbeitsbreite, wodurch die Gesamtbreite einer solchen Vorrichtung entsprechend breiter ist, als die Arbeitsbreite der Vorrichtung, die durch die Breite der Zinkenreihen bestimmt wird.

Die außenseitige Anordnung derartiger Transmissionsgetriebe ist daher insofern von Nachteil, als dass die zur Verfügung stehende zulässige Transportbreite nicht für die Arbeitsbreite genutzt wird. So besteht z.B. die Gefahr, dass das der Aufnahmevorrichtung nachfolgende Fahrzeug randseitig über nicht aufgenommenes, am Boden liegendes Erntegut fährt.

Darüber hinaus ist mit herkömmlichen Aufnahmevorrichtungen keine Vergrößerung der Arbeitsbreite durch Anschluss weiterer Aufnahmevorrichtungen an der Außenseite möglich, da durch die dort befindlichen Transmissionsgetriebe eine Lücke ohne Förderzinken vorliegen würde, in der das Erntegut nicht oder nur unzuverlässig vom Boden aufgenommen werden könnte.

Dementsprechend sind Vorrichtungen mit mehreren Aufnahmeeinheiten, wie in den Druckschriften US 3,523,412, DE 43 41 610 A1, DE 695 23 719 T2 und EP 640 277 B1 nur in der Lage, vorab in Schwaden gelegtes Erntegut vollständig aufzunehmen.

Aufgabe der Erfindung ist es daher, eine Vorrichtung der einleitend genannten Art zu schaffen, bei der die Nachteile des Stands der Technik reduziert bzw. vermieden werden.

Diese Aufgabe wird, ausgehend von einer Erntevorsatzvorrichtung nach dem Oberbegriff des Anspruchs 1, durch die kennzeichnende Merkmale der unabhängigen Ansprüche gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung vor allem dadurch aus, dass in Arbeitsstellung der Abstand der äußeren benachbarten Aufnahmeelemente zweier benachbarter Aufnahmeeinheiten im Wesentlichen gleich oder kleiner als der größte Abstand zwischen zwei Aufnahmeelementen innerhalb der Arbeitsbreite einer der Aufnahmeeinheiten ist. Mit Hilfe der Erfindungen kann nun eine durchgehende Arbeitsbreite auch bei nebeneinander angeordneten Aufnahmeeinheiten geschaffen werden. Hierbei wird der Abstand in der Verteilung der Aufnahmeelemente, z.B. als Aufnahmezinken realisiert, gar nicht oder nur durch eine unmaßgebliche Vergrößerung zweier benachbarter Aufnahmeelemente verändert, wobei die benachbarten Aufnahmeelemente jeweils zwei separaten, benachbarten Aufnahmeeinheiten zugeordnet sind. Das bedeutet, dass ein am Ende angeordnetes bzw. äußerstes Aufnahmeelement zum äußersten Rand der Aufnahmeeinheit derart gering beabstandet ist, dass ein entsprechendes randseitiges bzw. äußerstes Aufnahmeelement der benachbarten Aufnahmeeinheit, das ebenfalls zum äußeren Rand der Aufnahmeeinheit entsprechend gering beabstandet ist, einen Abstand zwischen diesen beiden randseitigen Aufnahmeelementen ausbildet, der gemäß der Erfindung ausgebildet ist. Zudem sind die benachbarten Aufnahmeeinheiten entsprechend dicht nebeneinander anzuordnen.

Vorzugsweise entspricht der Abstand der äußeren Aufnahmeelemente von benachbarten Aufnahmeeinheiten im Wesentlichen dem Abstand zweier Aufnahmeelemente innerhalb der Arbeitsbreite einer Aufnahmeeinheit.

Grundsätzlich kann gemäß der Erfindung erreicht werden, dass auf dem Boden liegendes Erntegut über die gesamte Arbeitsbreite wenigstens zweier benachbarter Arbeitseinheiten im Wesentlichen vollständig aufgenommen werden kann, ohne dass beispielsweise im Bereich des Übergangs zweier benachbarter Arbeitseinheiten Erntegut auf dem Boden liegen bleibt. Dementsprechend eröffnen sich gemäß der Erfindung neue Anwendungsmöglichkeiten in der Landwirtschaft. Beispielsweise kann mit der erfindungsgemäßen Vorrichtung nicht zusammengeschwadetes bzw. zusammengerechtes Erntegut (flächig) aufgenommen werden. Hierdurch kann in vorteilhafter Weise ein bislang üblicher Arbeitsgang, d.h. insbesondere das Schwaden bzw. Zusammenrechen von Erntegut, vollständig entfallen, was die Wirtschaftlichkeit des Erntens von entsprechendem Erntegut deutlich verbessert.

Möglicherweise kann lediglich ein Mäharbeitsgang vor dem Aufnehmen vorgesehen werden, wobei das Mähwerk, wie bereits teilweise üblich, eine Querfördereinheit oder dergleichen zum Verringern der Breite des abgelegten bzw. gemähten Erntegutes aufweist. Dies ist beispielsweise bei der Grünfutterernte bzw. der Silageernte oder der Ernte von sogenannten Biomassepflanzen oder von Stroh von besonderem Vorteil.

Beispielsweise kann ein Großflächenmähwerk, wie bereits unter dem Handelsnamen "Cougar" der Anmelderin handelsüblich, ein Streifen von ca. 14 Metern Breite abmähen, der mit diesem Mähwerk bereits auf ca. 7 Meter Breite zusammengelegt werden kann. Unmittelbar danach, d.h. ohne einen separaten Schwad- oder Zusammenlegvorgang, kann mittels einem entsprechend groß' ausgebildeten Arbeitsgerät bzw. der Vorrichtung gemäß der Erfindung mit beispielsweise ca. 8 Metern Arbeitsbreite, der ca. 7 Meter breite Mähgutstreifen vollständig aufgenommen und z.B. auf eine Ladeeinheit bzw. einen Anhänger einer Zugmaschine befördert werden. Gegebenenfalls kann zwischen dem Mähen und dem Aufnehmen mittels einer Vorrichtung gemäß der Erfindung mehrere Stunden oder Tage zur Reduzierung des Feuchtegehalts des Ernteguts liegen.

Die durchschnittliche Länge des aufzunehmenden Ernteguts hängt zweifelsohne davon ab, welche Art von Erntegut aufzunehmen ist. Beispielsweise ist im Allgemeinen die durchschnittliche Länge von Gras, insbesondere in einem zweiten, dritten oder späteren Schnitt eines Jahres, deutlich kleiner als beispielsweise bei hochwachsenden Biomassepflanzen oder auch von Stroh etc. Aufgrund dessen wird gemäß der Erfindung in der Arbeitsstellung der Abstand der äußeren Aufnahmeelemente von benachbarten Aufnahmeeinheiten im Wesentlichen gleich oder kleiner als der größte Abstand der Aufnahmeelemente innerhalb der Arbeitsbreite einer der Aufnahmeeinheiten gewählt.

In der Praxis wird sicherlich nicht für jede einzelne Erntegutart ein unterschiedlicher Abstand zwischen den Aufnahmeelementen, insbesondere der äußeren Aufnahmeelemente von benachbarten Aufnahmeeinheiten realisiert. Sicherlich könnte eine entsprechende Anpassung der Vorrichtung gemäß der Erfindung erfolgen.

Es wird jedoch für die Herstellung einer erfindungsgemäßen Vorrichtung wirtschaftlicher sein, eine einheitliche bzw. standardisierte Vorrichtung bzw. einheitliche bzw. standardisierte Aufnahmeeinheiten herzustellen, unabhängig von der Art des Erntegutes. Hierbei ist anzunehmen, dass der Abstand der Aufnahmeelemente sowohl innerhalb der Arbeitsbreite einer Aufnahmeeinheit als auch der Abstand der äußeren Aufnahmeelemente von benachbarten Aufnahmeeinheiten an die kleinste zu erwartende, durchschnittliche Länge des Ernteguts angepasst wird, die eine wirtschaftliche Ernte bzw. einen wirtschaftlichen Ertrag noch ermöglicht. Das bedeutet, dass sicherlich Erntegut mit einer durchschnittlichen Länge kleiner ca. 2 cm nicht von Interesse sein wird. Ein entsprechende Verfahrensweise ist auch bereits bei derzeit üblichen "Pick-Up" festzustellen. Hier haben sich beispielsweise Standardmaße für den Abstand entsprechender Aufnahmeelemente bewährt bzw. über die Jahre hinweg herauskristallisiert.

In einer vorteilhaften Ausführungsform der Erfindung ist in der Arbeitsstellung der Abstand der äußeren Aufnahmeelemente von benachbarten Aufnahmeeinheiten im Wesentlichen zwischen 20 und 150 mm, vorzugsweise zwischen 40 und 90 mm. Standardmäßig könnte durchaus ein Abstand der äußeren Aufnahmeelemente von benachbarten Aufnahmeeinheiten im Wesentlichen zwischen 50 und 60 mm von besonderem Vorteil sein. Ein derartiger Abstand ist nicht nur für Gras, z.B. vom dritten Schnitt eines Jahres, sondern auch für andere Erntegüter wie Stroh, Silage, Luzerne, Heu oder dergleichen, von Vorteil. Hierdurch wird eine durchgehende Arbeitsbreite der Vorrichtung gemäß der Erfindung realisiert, ohne dass entsprechendes Erntegut zwischen zwei benachbarten Aufnahmeeinheiten auf dem Boden liegen bleibt. Zweifelsohne werden auch einzelne Grashalme etc. in vernachlässigbarem Umfang auf dem Boden liegen bleiben, was die Funktionalität der Erfindung nicht beeinträchtigen wird.

Vorzugsweise sind in Arbeitsstellung die Arbeitseinheiten in Fahrtrichtung betrachtet wenigstens teilweise überlappend angeordnet. Hierdurch wird eine kompakte Anordnung der Aufnahmeeinheiten in der Arbeitsstellung realisierbar, was unter anderem zu einer besonders wendigen landwirtschaftlichen Fahrzeugeinheit führt.

Vorzugsweise sind in Arbeitsstellung die Aufnahmeeinheiten im Wesentlichen auf einer Höhe bezogen auf die Fahrtrichtung angeordnet. Insbesondere sind die Drehachsen der Aufnahmeeinheiten in Ruheposition in der Arbeitsstellung im Wesentlichen fluchtend ausgerichtet. Hierdurch ist eine durchgehende Arbeitsbreite realisierbar, die auch in Kurvenfahrten keine Zwischenbereiche eröffnet, in denen gegebenenfalls Erntegut auf dem Boden liegen bleibt. Es wird somit eine geschlossene, insbesondere geradlinige und durchgehende Arbeitsbreite gemäß der Erfindung realisiert.

Vorteilhafterweise ist wenigstens eine Verstelleinrichtung zum Verstellen der Aufnahmeeinheiten zwischen der Arbeitsstellung und einer Transportstellung vorgesehen, wobei die Transportstellung insbesondere eine geringere Transportbreite als die Arbeitsbreite aufweist und in vorteilhafter Weise besonders kompakt realisiert werden sollte.

Vorzugsweise sind die Aufnahmeeinheiten in Transportstellung wenigstens teilweise vertikal übereinander angeordnet, beispielsweise ist denkbar, alle drei Aufnahmeeinheiten übereinander in unterschiedlichen Schichten anzuordnen. Vorzugsweise wird jedoch eine Aufnahmeeinheit über zwei Aufnahmeeinheiten angeordnet, wobei die beiden Aufnahmeeinheiten auf etwa gleicher Höhe bzw. gleichem Niveau positioniert werden.

Vorzugsweise sind wenigstens drei Aufnahmeeinheiten vorgesehen, wobei insbesondere zwei bezüglich der Breite des entsprechenden Fahrzeugs überstehende seitlich angeordnete Aufnahmeeinheiten und eine zentrale Aufnahmeeinheit realisiert wird. Vorteilhafterweise sind die beiden seitlichen Aufnahmeeinheiten in vergleichbarer Art und Weise in die Transportstellung zu verbringen.

In einer bevorzugten Weiterbildung der Erfindung weist die Verstelleinrichtung wenigstens eine Lineareinheit zur im Wesentlichen geradlinigen Translation wenigstens einer der Aufnahmeeinheiten, insbesondere der zentralen Aufnahmeeinheit, auf. Es hat sich gezeigt, dass eine lineare, insbesondere im Wesentlichen vertikale Verstellung einer der Arbeits- bzw. Aufnahmeeinheiten diese besonders kompakt sowohl in Arbeitsstellung als auch in Transportstellung positioniert, was sich nicht nur bezüglich der Kompaktheit, Wendigkeit, sondern auch bezüglich der auftretenden Achslasten vorteilhaft auswirkt.

Vorzugsweise sind in der Transportstellung die zwei äußeren bzw. seitlichen Aufnahmeeinheiten in Fahrtrichtung ausgerichtet.

In einer bevorzugten Variante der Erfindung ist wenigstens eine Querfördereinheit zum wenigstens teilweise quer zur Fahrtrichtung gerichteten Fördern des Ernteguts vorgesehen. Hiermit kann die große Arbeitsbreite zur Aufnahme des Ernteguts in vorteilhafter Weise reduziert bzw. auf einen kleinräumigen Bereich bzw. Punkt reduziert werden. Beispielsweise kann mit Hilfe einer entsprechenden Querfördereinheit ein Befördern des aufgenommenen Ernteguts zu einem Einzug einer Zugmaschine bzw. eines bereits handelsüblichen Feldhäckslers oder dergleichen realisiert werden.

In einer bevorzugten Variante der Erfindung weist jede Arbeitseinheit bzw. Aufnahmeeinheit eine separate Querfördereinheit auf, die in vorteilhafter Weise im Wesentlichen auf einer Höhe bezogen auf die Fahrtrichtung angeordnet sind. Vorzugsweise sind die Querfördereinheiten fluchtend angeordnet. Gerade eine derartige Anordnungen mehrerer Querfördereinheiten ist bei der Ausbildung der Querfördereinheit als eine um eine Rotationsachse rotierende Förderschnecke von besonderem Vorteil.

Vorzugsweise weist die Querfördereinheit wenigstens eine Umlenkeinheit zum Umlenken und Fördern des Ernteguts entgegen der Fahrtrichtung auf. Mit Hilfe einer vorteilhaften Umlenkeinheit kann beispielsweise der enorm große Förderstrom an Erntegut effizient beispielsweise einem Einzug eines Feldhäckslers oder dergleichen zugeführt werden. Hierdurch kann ansonsten auftretender Stau von Erntegut im Bereich des Einzugs bzw. vorzugsweise im mittleren Bereich der Vorrichtung gemäß der Erfindung wirkungsvoll verhindert werden. Beispielsweise wird das Erntegut vergleichsweise stark durch die Umlenkeinheit zusammengepresst, was zu einer vorteilhaften Weiterverarbeitung des Ernteguts beispielsweise im Feldhäcksler etc. führen kann.

Vorteilhafterweise weist die Umlenkeinheit wenigstens eine um eine Antriebsachse drehendes Förderelement auf. Beispielsweise ist das Förderelement als radial ausgerichteter Zinken oder dergleichen ausgebildet. In einer bevorzugten Weiterbildung der Erfindung ist das Förderelement als wenigstens teilweise sich über die Antriebsachse erstreckendes, längliches Paddelelement ausgebildet. Beispielsweise sind mehrere Förderelemente bzw. Paddel vorgesehen, die sich um die Antriebsachse der Umlenkeinheit drehen.

Zum lösen der Aufgabe der Erfindung kann alternativ oder in Kombination zu den zuvor genannten Maßnahmen wenigstens eine im Wesentlichen in Fahrtrichtung ausgerichtete Schwenkachse zum gemeinsamen Verschwenken wenigstens zweier der Aufnahmeeinheiten vorgesehen werden. Mit Hilfe einer derartigen Schwenkachse kann beispielsweise eine Anpassung der oder den Aufnahmeeinheiten an Bodenunebenheiten erfolgen. Beispielsweise verdrehen sich hierdurch die beiden Aufnahmeeinheiten in Bezug zum Fahrzeug, insbesondere zum Feldhäcksler oder dergleichen. Eine entsprechende Bodenanpassung ist gerade bei Vorrichtungen gemäß der Erfindung von großem Vorteil, die mehrere Meter breite Arbeitsbreiten, insbesondere ca. 8 Meter Arbeitsbreite aufweisen.

Vorzugsweise ist die Schwenkachse zum gemeinsamen Verschwenken aller Aufnahmeeinheiten ausgebildet. Es hat sich in der Praxis bewährt, alle vorhandenen Aufnahmeeinheiten gemeinsam um die Schwenkachse zu verschwenken, da hierdurch eine quer zur Fahrtrichtung betrachtete Relativbewegung zwischen den einzelnen Aufnahmeeinheiten nicht erfolgt, was die durchgängige bzw. geschlossene Arbeitsbreite über die gesamte Vorrichtung gemäß der Erfindung sicherstellt.

Grundsätzlich ist auch denkbar, jede Aufnahmeeinheit separat um eine Drehachse verschwenken zu lassen, die im Wesentlichen in Fahrtrichtung ausgebildet ist, hierbei sollten jedoch vorteilhafte Ausgleichsmechanismen oder Ähnliches realisiert werden, um den Abstand zwischen zwei äußeren Aufnahmeelemente von benachbarten Aufnahmeeinheiten nicht zu groß werden zu lassen.

Vorzugsweise ist wenigstens eine die Schwenkachse aufweisende Kopplungsvorrichtung zum Koppeln mit dem Fahrzeug vorgesehen. Mit Hilfe einer derartigen Kopplungsvorrichtung kann beispielsweise ein festes Ankoppeln bzw. Verriegeln mit dem Arbeitsfahrzeug realisiert werden, so dass die Kopplungsvorrichtung bzw. zumindest ein Teil von dieser starr mit dem Fahrzeug verbunden ist und der Rest der Vorrichtung gemäß der Erfindung um die vorteilhafte Schwenkachse verschwenken kann.

Grundsätzlich wird es im Allgemeinen ausreichend sein, ein Verschwenken der Vorrichtung gemäß der Erfindung um die vorher genannte Schwenkachse von wenigen Graden zu realisieren. Beispielsweise ist ein Verschwenken um zweimal 10°, insbesondere zweimal etwa 5°, zumindest für die meisten Anwendungsfälle völlig ausreichend. In Einzelfällen können durchaus auch größere Verschwenkungswinkel realisiert werden.

Generell werden die Aufnahmeelemente vorzugsweise in wenigstens einer quer zur Fahrtrichtung verlaufenden, sich über die Arbeitsbreite der Aufnahmeeinheit bzw. der Vorrichtung gemäß der Erfindung erstreckende Reihe angeordnet. Dies hat sich für eine gleichmäßige Aufnahme des Erntegutes bewährt und erleichtert zudem bei Bedarf die Ausbildung einer Steuerung der radialen Ausrichtung der Aufnahmeelemente bzw. Aufnahmezinken.

Der Antrieb einer erfindungsgemäßen Vorrichtung wird vorzugsweise so ausgebildet, dass das Transmissionsglied, z.B. in Form eines Transmissionsgetriebes, für den Antrieb der Aufnahmeelemente, z.B. in Form von Aufnahmezinken, innerhalb der Arbeitsbreite der Mehrzahl der über die Arbeitsbreite verteilten Aufnahmeelemente angeordnet ist.

Als Transmissionsglied ist in diesem Sinne jede Vorrichtung zu verstehen, mit der die erforderliche Antriebsenergie auf die Aufnahmeelemente übertragen wird.

Mit einer so angetriebenen mehrteiligen Aufnahmevorrichtung kann die gewünschte Verbreiterung der Arbeitsbreite durch Verwendung zweier oder mehrerer Arbeitseinheiten vorgenommen werden, die in Arbeitsstellung nebeneinander gestellt werden und für die Transportstellung in eine entsprechend abgeänderte Transportlage gebracht werden. Da das außenliegende Transmissionsglied (z.B. in Form eines Transmissionsgetriebes) fehlt, können die äußeren Aufnahmeelemente benachbarter Arbeitseinheiten wesentlich näher zueinander angeordnet werden.

In einer besonderen Ausführungsform der Erfindung wird wenigstens ein Transmissionsmitglied, z.B. als Transmissionsgetriebe für den Antrieb der Aufnahmeelemente in einen neben den umlaufenden Aufnahmeelementen verlaufenden Antriebsstrang integriert. Auf diese Weise ist eine Übertragung des Antriebsmomentes bzw. der Antriebskraft aus dem benachbart verlaufenden Antriebsstrang zu den Aufnahmeelementen innerhalb der Arbeitsbreite der Aufnahmevorrichtung möglich.

Im Falle eines mechanischen Antriebs erfolgt dabei die Transmission vorzugsweise über ein umlaufendes Zugmittel, beispielsweise eine Kette, einen Zahnriemen, einen Keilriemen oder dergleichen, da durch derartige Transmissionsglieder eine parallele Übertragung von Antriebsmomenten mit vergleichsweise geringer Dimensionierung in der Breite möglich ist.

Grundsätzlich können die Aufnahmeelemente jedoch auch hydraulisch und/oder elektrisch angetrieben werden, so dass in diesem Fall als Transmissionsglied ein entsprechender, hydraulischer und/oder elektrischer Motor gegebenenfalls unter Verwendung eines nachgeschalteten Getriebes, z.B. in Form eines Planetengetriebes, dient.

Der Anschluss des Antriebs der Aufnahmeelemente wird bevorzugt auf der Rückseite, bezogen auf die Fahrtrichtung der Aufnahmevorrichtung, vorgenommen, da an dieser Stelle der Anschluss unbeeinträchtigt vom in Fahrtrichtung vorne aufgenommenen Erntegut stattfinden kann.

In einer besonderen Ausführungsform der Erfindung werden zwei oder mehrere Transmissionsglieder für die Aufnahmeelemente vorgesehen. Dies ist insbesondere dann von Vorteil, wenn die Gesamtarbeitsbreite durch zwei oder mehrere Arbeitseinheiten zusammengesetzt wird. Derartige Arbeitseinheiten können in der Transportstellung abweichend von der Arbeitsstellung angeordnet werden, um bei möglichst großer Arbeitsbreite eine im Straßenverkehr zulässige, deutlich kleinere Transportbreite zu erzielen.

Im Falle einer derartigen Ausführungsform der erfindungsgemäßen Aufnahmevorrichtung erübrigt sich durch die Verwendung zweier oder mehrerer entsprechender Transmissionsglieder ein unmittelbarer Anschluss des Antriebs der Aufnahmeelemente zwischen den einzelnen Arbeitseinheiten untereinander.

In einer besonderen Ausführungsform der Erfindung wird die Bewegung der Aufnahmeelemente während des Umlaufens gesteuert. Eine derartige Steuerung ist bei einem Teil der bekannten "Pick-up" bereits verwirklicht. Diese Steuerung verändert die Ausrichtung der Aufnahmeelemente, z.B. in Form von Aufnahmezinken, relativ zu der Drehachse, um die die Aufnahmeelemente umlaufen.

Durch eine solche Steuerung der Aufnahmeelemente wird der Materialfluss bei der Auf- und Mitnahme vom Boden bis hin zur Abgabe an eine nachgeschaltete Fördereinrichtung in bekannter Weise verbessert.

Eine derartige Steuerung der Aufnahmeelemente wird vorteilhafterweise mit Hilfe einer Kurvenbahn durchgeführt, über die die Winkelstellung der Aufnahmeelemente beim Umlaufen eingestellt wird. In einer erfindungsgemäßen Vorrichtung wird eine solche Kurvenbahn bzw. Steuerkurve bevorzugt ebenfalls innerhalb der Arbeitsbreite der Aufnahmeelemente untergebracht. Bei herkömmlichen Aufnahmevorrichtungen mit einer derartigen Steuerung wurde bislang auch die Steuereinheit, insbesondere die Steuerkurve, auf der Außenseite untergebracht, wodurch die Arbeitsbreite der Reihen von Aufnahmeelementen ebenfalls verkleinert wurde. Durch die Anordnung der Steuerung, insbesondere der Steuerkurve innerhalb der Arbeitsbreite der Aufnahmeelemente, wird auch dieser Nachteil verringert bzw. unterbunden.

In einer bevorzugten Ausführungsform der Erfindung werden dabei die Steuereinheit und das Transmissionsglied voneinander beabstandet angeordnet, wodurch eine regelmäßige Verteilung oder Anordnung von Aufnahmeelementen noch weniger beeinträchtigt wird. Bislang wurden beide Einheiten unmittelbar nebeneinander an der Außenseite angeordnet, wodurch sich ein entsprechender Platzbedarf ergab. Durch die separate Anordnung ist es nunmehr möglich, ein Transmissionsglied und eine davon beabstandete Steuereinheit so anzuordnen, dass der Abstand der Aufnahmeelemente gar nicht oder nur unmaßgeblich davon beeinflusst wird. Hierdurch lässt sich eine durchgehende Arbeitsbreite der Aufnahmeelemente leichter verwirklichen.

Die Aufnahmeelemente werden vorzugsweise in wenigstens einer quer zur Fahrtrichtung verlaufenden, sich über die Arbeitsbreite erstreckende Reihe angeordnet. Dies hat sich für eine gleichmäßige Aufnahme des Ernteguts bewährt und erleichtert zudem bei Bedarf die Ausbildung einer Steuerung wie oben angeführt.

Vorzugsweise werden zwei oder mehrere derartiger Steuereinheiten vorgesehen, was insbesondere bei einer Aufnahmevorrichtung aus zwei oder mehreren Arbeitseinheiten von Vorteil ist, da diese Arbeitseinheiten dadurch unabhängig voneinander gesteuert werden können.

Bevorzugt werden in Förderrichtung hinter den Aufnahmeelementen Querförderelemente oder eine Querfördereinheit, z.B. eine Förderschnecke, angeordnet. Eine derartige Querfördereinheit dient dazu, weiter außen mittels der Aufnahmeelemente aufgenommenes Erntegut zu einem davon beabstandeten Materialeinzug zu fördern. Dies ist beispielsweise bei einem Feldhäcksler oder aber auch, je nach Ausführung, bei einer Ballenpresse der Fall, wo das Material vor der Weiterverarbeitung zusammengeführt wird. Eine solche Querfördereinheit, insbesondere in Form einer Förderschnecke, wird dabei bevorzugt zentral angetrieben. Die hierzu erforderlichen Transmissionsglieder können dabei ohne weiteres neben dem zentralen Materialeinzug untergebracht werden, in dessen Bereich eine solche Querfördereinheit problemlos unterbrochen werden kann.

Im Falle der Verwendung zweier oder mehrerer, für den Übergang zwischen einer Arbeitsstellung und einer Transportstellung gegeneinander beweglichen Aufnahmeeinheiten werden vorteilhafterweise bei den außermittig angeordneten Aufnahmeeinheiten ebenfalls Querfördereinheiten, beispielsweise Querförderschnecken, vorgesehen. Diese Querförderschnecken sammeln das Erntegut von außen und leiten es sodann an eine oder mehrere weiter innen angeordnete Querfördereinheiten, beispielsweise an eine Querfördereinheit einer zentralen Aufnahmeeinheit weiter. Außenliegende Querfördereinheiten sind demnach vorteilhafterweise nicht unterbrochen. Im Falle einer Querförderschnecke wird daher eine außenliegende Querförderschnecke vorzugsweise außen angetrieben. Hierzu kann am äußeren Ende eines neben den Zinkenreihen verlaufenden Antriebsstrangs ein Transmissionsgetriebe vorgesehen sein, das außen an die Querfördereinheit angeschlossen wird.

Eine erfindungsgemäße Aufnahmeeinheit ist bei unterschiedlichen Erntemaschinen einsetzbar. Diese kann beispielsweise bei Erntemaschinen, die an ein Zugfahrzeug, beispielsweise an einen Traktor anhängbar sind, verwendet werden. Beispielhaft werden hierzu anhängbare Ballenpressen oder Ladewagen genannt.

Eine erfindungsgemäße Aufnahmevorrichtung ist jedoch ebenfalls vorteilhaft bei selbstfahrenden Erntemaschinen einsetzbar, beispielsweise bei Feldhäckslern oder dergleichen. Im Übrigen wäre bei Verwendung einer durch mehrere Aufnahmeeinheiten deutlich verbreiterten Aufnahmevorrichtung auch eine selbstfahrende Presse denkbar, bei der ein vorheriges Schwaden vor dem Aufnehmen und Pressen von Erntegut entfallen könnte.

In ersten Versuchen hat sich besonders bewährt, die Erntevorsatzvorrichtung derart auszubilden, dass jede Aufnahmeeinheit separat von der Arbeits- in die jeweilige Transportstellung und umgekehrt verstellbar bzw. verschwenkbar ist und/oder eine separate Querfördereinheit aufweist und/oder jeweils eine Mehrzahl an Aufnahmeelemente umfasst und/oder eine separate Antriebseinheit zum Antreiben der Aufnahmeelemente aufweißt. Dies verbessert unter anderem die Transportierbarkeit und das Handling bei besonders groß ausgebildeten Erntevorsatzvorrichtungen mit z.B. etwa sechs oder mehr Metern Gesamt-Arbeitsbreite.

Ein Ausführungsbeispiel der Erfindung ist in der Zeichnung dargestellt und wird anhand der Figuren nachfolgend näher erläutert.

Im Einzelnen zeigt:
- Figur 1: eine schematische Frontansicht eines Feldhäckslers mit dreiteiliger Aufnahmevorrichtung in Arbeitsstellung,
- Figur 2: eine schematische Seitenansicht eines Feldhäckslers gemäß Figur 1,
- Figur 3: eine perspektivische, teilweise geschnittene Darstellung einer einzelnen Aufnahmeeinheit gemäß der Erfindung,
- Figur 4: eine Draufsicht von oben auf eine Aufnahmeeinheit gemäß Figur 3,
- Figur 5: eine Seitenansicht einer Aufnahmeeinheit gemäß Figur 4,
- Figur 6: eine schematische Frontansicht des Feldhäckslers gemäß Figur 1 in einer ersten Zwischenstellung mit gehobenem Mittelteil,

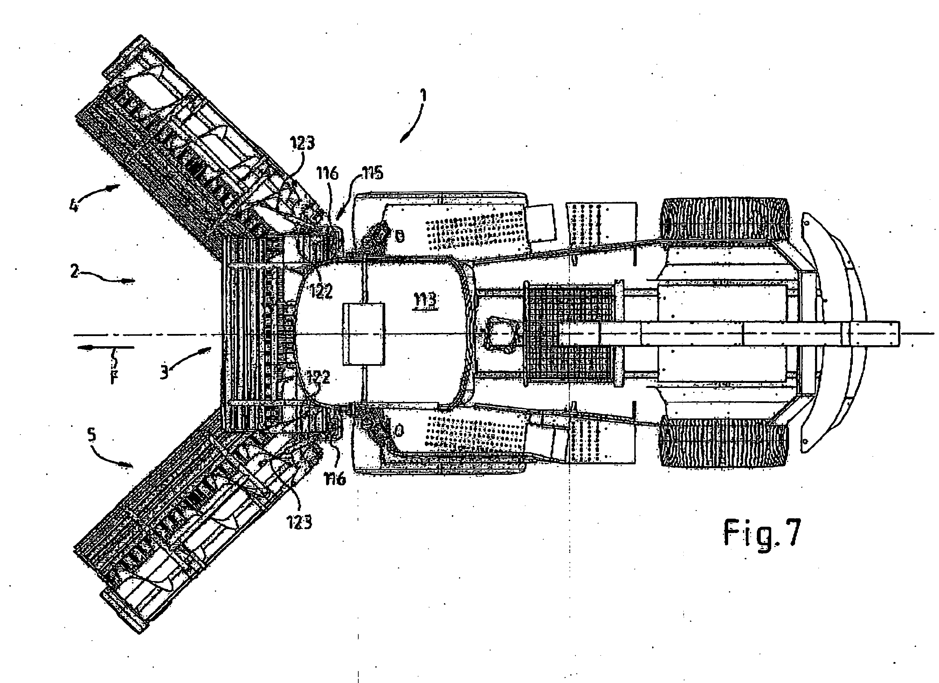

- Figur 7: eine schematische Draufsicht des Feldhäckslers gemäß Figur 1 in einer zweiten Zwischenstellung mit gehobenem Zwischenteil und teilweise eingeschwenkten Außenteilen,
- Figur 8: eine schematische Seitenansicht des Feldhäckslers gemäß Figur 1 in Transportstellung,
- Figur 9: eine schematische Draufsicht des Feldhäckslers gemäß Figur 1 in Transportstellung,
- Figur 10: eine schematische Frontansicht des Feldhäckslers aus Figur 1 mit schräg ausgerichteter Vorrichtung gemäß der Erfindung,
- Figur 11: eine schematische Rückansicht eines freigelegten Teils der Vorrichtung gemäß der Erfindung mit Schwenkmechanismus für den Bodenausgleich und
- Figur 12: eine schematische, perspektivische Darstellung freigelegter Komponenten einer zentralen Aufnahmeeinheit mit einem Einzug.

Ein beispielhaft als Feldhäcksler 1 ausgebildetes multifunktionales landwirtschaftliches Fahrzeug weist eine mehrteilige Vorrichtung 2 gemäß der Erfindung auf. Der Feldhäcksler 1 entspricht beispielsweise einem bereits handelsüblichen Feldhäcksler 1, der unter der Bezeichnung "JAGUAR" der Anmelderin bereits vielfach im Einsatz ist.

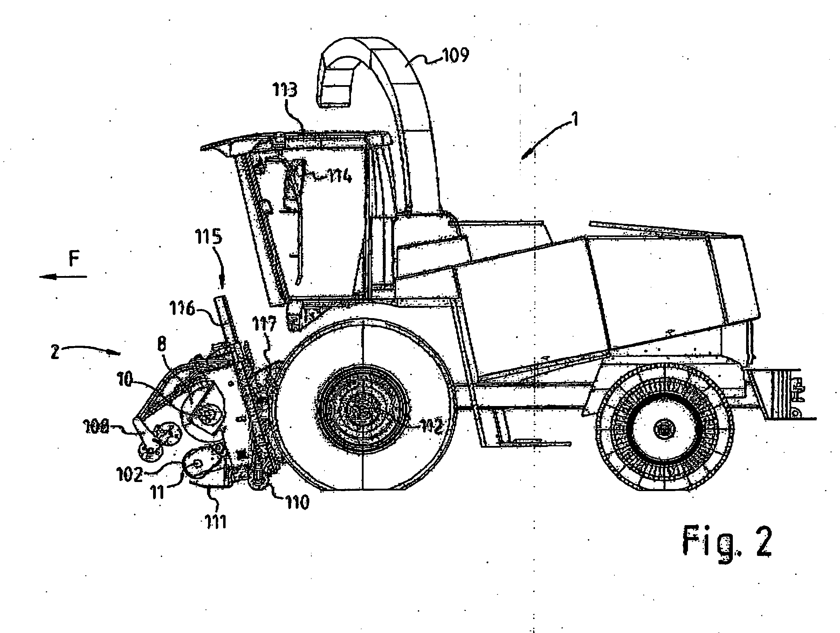

Der Feldhäcksler 1 nimmt eine Vorrichtung 2 gemäß der Erfindung auf, die als sogenannte "Pick-Up" ausgebildet ist. Die Vorrichtung 2 umfasst insgesamt drei Arbeits- bzw. Aufnahmeeinheiten, eine zentrale Einheit 3 sowie zwei Seiteneinheiten 4, 5, die eine Gesamt-Arbeitsbreite W von z.B. ca. 8 Metern aufweisen. Querförderschnecken 6, 7, 8 dienen dazu, aufgenommenes Erntegut einem zentralen Einzug 9 zuzuführen. Die Lage einer Drehachse 10 oberhalb einer Drehachse 11 für die umlaufenden, lediglich aus Gründen der Übersichtlichkeit hier nicht näher dargestellten Förderzinken ist in der Darstellung gemäß Figur 2 gut erkennbar.

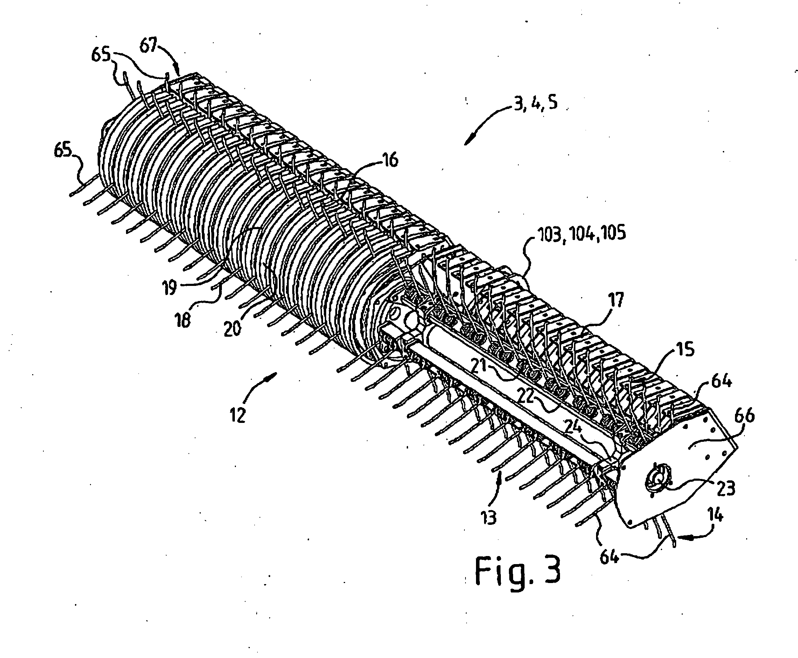

Die lediglich in den Figuren 3, 4 und 5 dargestellten Förderzinken 18 bzw. 21 bzw. Aufnahmeelemente sind Bestandteil einer "eigentlichen" Pick-Up 100, 101, 102. Derartige Pick-Up 100 bis 102 weisen im Allgemeinen vorzugsweise vier um ca. 90° radial versetzte Zinkenreihen 13, 14, 15, 16 auf, die sich um die Drehachse 11 bzw. 23 drehen. Häufig ist auch eine Zinkensteuerung vorgesehen, die eine mechanische Kurvenbahn oder dergleichen umfasst, so dass sich die radiale Ausrichtung der Zinken 18 bei der Rotation um die Drehachse 11 in vorteilhafter Weise verstellt. Eine derartige Zinkensteuerung bzw. die "eigentlichen" Pick-Up 100, 101, 102 werden bislang bereits beispielsweise bei Ballenpressen, Ladewagen oder dergleichen entsprechend eingesetzt. Aufgrund dessen kann für die Pick-Up 100 bis 102 zu einem Großteil auf bereits handelsübliche Komponenten zurückgegriffen werden, wie z.B. die Zinken 18, 21 die Abdeckbleche zwischen den Zinken 18, 21 etc..

Allerdings weisen die dargestellten Pick-Up 100 bis 102 der Vorrichtung 2 einen neuartigen Antrieb auf, da bislang bei einer einzelnen Pick-Up der Antrieb der Zinken außenseitig angeordnet war. Dies könnte zwar für die beiden äußeren Pick-Up 100 und 102 realisiert werden, jedoch nicht für die mittlere Pick-Up 100, da ansonsten der Abstand zwischen Randzinken 64, 65 zweier benachbarter Pick-Up 100 bis 102 so groß werden würde, dass dazwischen Erntegut auf dem Feld liegen bleiben würde.

Aufgrund dessen wird hier ein neuartiger Antrieb 103, 104, 105 für alle drei Pick-Up 100 bis 102 verwendet, der innerhalb der jeweiligen Arbeitsbreite A angeordnet ist. Die innerhalb der Arbeitsbreite A der Förderzinken 21 angeordneten Antriebe 103, 104, 105 sind lediglich beispielhaft etwa in der Mitte der jeweiligen Pick-Up 100 bis 102 angeordnet.

Vor allem in Figur 2 wird deutlich, dass das nicht näher dargestellte Erntegut beispielsweise mittels der Pick-Up 100, 101, 102 aufgenommen und unter Zuhilfenahme eines Niederhalters 106, 107, 108 in vorteilhafter Weise zu den Querförderschnecken 6 bis 8 angehoben bzw. transportiert wird. Vorteilhafterweise sind die Niederhalter 106 bis 108 derart ausgebildet, dass diese um eine Drehachse verschwenkbar und somit höhenvariabel sind und zudem mittels zweier Rollen mit nicht näher dargestellter Paddeln oder dergleichen in vorteilhafter Weise das Befördern des Erntegut zu den Querförderschnecken 6 bis 8 unterstützen bzw. sicherstellen.

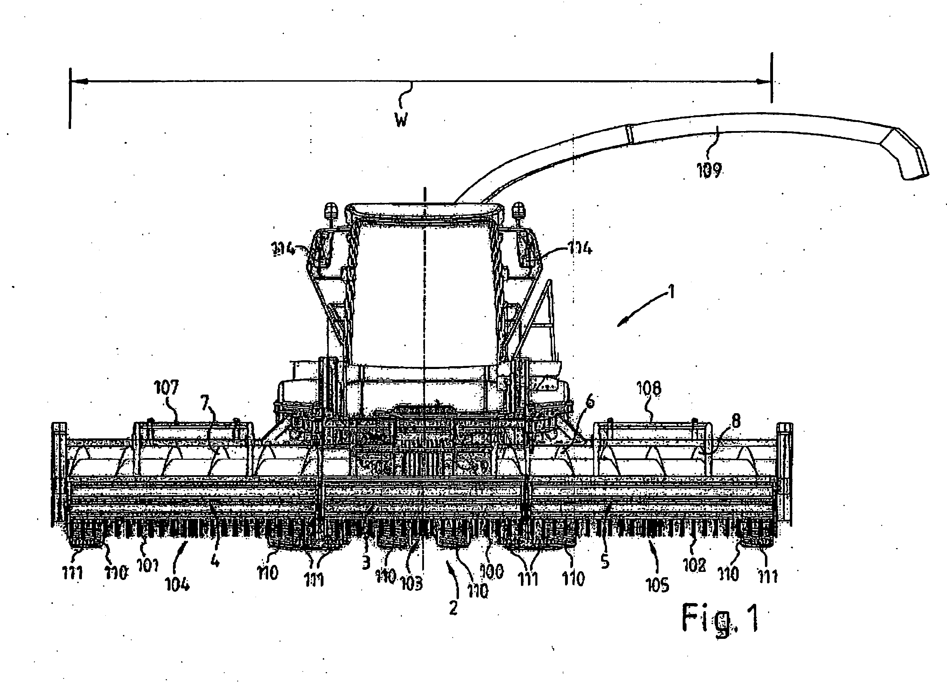

Vor allem in Figur 1 wird deutlich, dass durch die Rotation der Querförderschnecken 6 bis 8 um die Drehachse 10 in entsprechend vorteilhafter Richtung das Erntegut in die Mitte des Feldhäckslers 1 bzw. der Vorrichtung 2 befördert wird, wobei ein optional vorzusehender Einzug 9 das Erntegut entgegen der Fahrtrichtung F ins Innere des Feldhäckslers 1 befördert bzw. bei besonders großen Erntegutmengen teilweise sogar hineinpresst. Vorteilhafterweise weist der Feldhäcksler 1 eine nicht näher dargestellte Häckselvorrichtung auf, die das Erntegut zerkleinert bzw. zerhäckselt und mittels einem Auswurfschacht 109 beispielsweise auf ein entsprechendes Transportfahrzeug befördert. Hier wird deutlich, dass das Fahrzeug bzw. der Feldhäcksler 1 als bereits derzeit vielfach im Einsatz befindlicher multifunktionaler Feldhäcksler 1, wie beispielsweise der Feldhäcksler "JAGUAR" der Anmelderin, verwendbar ist.

Darüber hinaus wird vor allem in Figur 2 deutlich, dass die Pick-Up 100 bis 102 vorteilhafte Stützräder 110 sowie Gleitstützen 111 aufweisen, wodurch in vorteilhafter Weise eine Abstützung der Einheiten 3 bis 5 sowie eine sogenannte Bodenkopierung dieser realisiert wird.

Generell können die Pick-Up 100 bis 102 in vorteilhafter Weise an einer drehbar ausgebildeten Schwinge oder dergleichen angeordnet werden, so dass die einzelnen Pick-Up 100 bis 102 mittels der jeweiligen Schwingen an Bodenunebenheiten während der Arbeitsphase angepasst werden können. Generell ist denkbar, dass auch je Einheit 3, 4, 5 auch zwei separat schwingbare bzw. höhenvariable Pick-Up oder auch mehr, verwendet werden können, um die Bodenanpassung gegebenenfalls noch weiter zu verbessern.

Aus den Figuren 1 und 2 wird zudem deutlich, dass die Drehachsen 10 und 11 der Pick-Up 100 bis 102 sowie der Querförderschnecken 6 bis 8 in Ruhestellung während der Arbeit auf gleicher Höhe bzw. fluchtend angeordnet sind. Gerade Figur 2 verdeutlicht, wie nahe die Vorrichtung 2 und somit der gemeinsame Schwerpunkt aller Einheiten 3 bis 5 am Feldhäcksler 1 bzw. an der Vorderradachse 112 angeordnet ist. Hierdurch ergibt sich eine besonders kompakte und wendige Fahrzeugseinheit während der Arbeit. Zudem wird auch die Achslast an den Vorderrädern während der Arbeit minimiert. Bei einem derartigen Fahrzeug, wie abgebildet, sitzt auch der Fahrer in seiner Kabine 113 unmittelbar nahe an der Erntegutaufnahmestelle bzw. unmittelbar über der Vorrichtung 2, so dass dieser den relevanten Arbeitsbereich der Vorrichtung 2 trotz der sehr großen Arbeitsbreite außerordentlich gut einsehen kann.

Grundsätzlich ist es bei derart großen Arbeitsbreiten von Vorteil, beispielsweise eine Bestandkantenerkennung und/oder ein Hinderniserkennungssystem und/oder ein Metalldetektor und/oder ein Ortungssystem, insbesondere ein GPS-System etc., oder dergleichen zum Schutz der Komponenten bzw. zur Automatisierung und Effizienzsteigerung der Erntegutaufnahme vorzusehen.

In Figur 3 ist ein Zinkenrotor 12 einer Aufnahmeeinheit 3, 4, 5 dargestellt. Mehrere quer zur Fahrrichtung F verlaufende Zinkenreihen 13, 14, 15, 16 dienen dazu, Erntegut vom Boden aufzunehmen und über Abstreifschlitze 17 der jeweiligen nachgeordneten Querförderschnecke 6, 7, 8 zu übergeben.

Die einzelnen Zinken 18 sind dabei in Schlitzen 19 zwischen Führungen 20 geführt. An den Führungen 20 gleitet das Erntegut durch die rotierende Bewegung der Zinken 18 nach oben, wo es in den Abstreifschlitzen 17 abgestreift wird.

Die Zinkenreihen 13, 14, 15, 16 bestehen aus Doppelzinken in Form von Federzinken 21, wie in der aufgeschnittenen rechten Hälfte des Zinkenrotors 12 zu erkennen ist. Die Federzinken 21 sind in U-Profilen 22 befestigt, die mit einer Drehachse 23 verbunden sind. Die Verbindung zwischen der Drehachse 23 und den U-Profilen 22 ist über kreuzartige Verbindungselemente 24 realisiert.

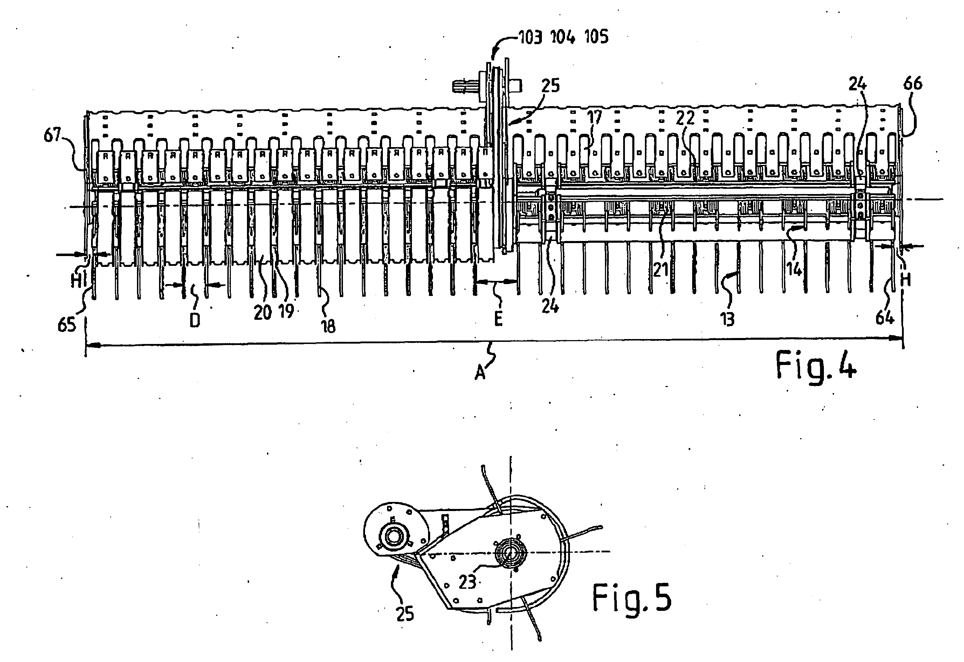

Die Drehachse 23 wiederum wird über ein Transmissionsgetriebe 25 angetrieben. In der perspektivischen Darstellung gemäß Figur 3 sowie in der Seitenansicht gemäß der Figur 5 ist erkennbar, dass die Zinken 18 eine unterschiedliche Winkelorientierung aufweisen können.

Vor allem durch die vorteilhafte Ausbildung der zentralen Aufnahmeeinheit 3 ist es möglich, die zentrale Aufnahmeeinheit 3 mit der Seitenaufnahmeeinheit 4 in gerader Verlängerung zu kombinieren, ohne dass sich eine maßgebliche Lücke zwischen den jeweiligen Aufnahme- und Förderzinken 18 ergibt, d.h. eine derart zusammengesetzte Aufnahmevorrichtung 2 kann lückenlos über die gesamte Arbeitsbreite Erntegut vom Boden aufnehmen.

Da auch der Antrieb 104, 105 für die linke und rechte Seitenaufnahmeeinheit 4, 5 innerhalb der Arbeitsbreite A des zugehörigen Zinkenrotors 12 angeordnet ist, befindet sich im Übergang zur zentralen Aufnahmeeinheit 3 kein störendes Getriebe. Dadurch lässt sich auch die linke und rechte Seitenaufnahmeeinheit 4, 5 neben der zentralen Aufnahmeeinheit 3 mit dieser kombiniert anordnen, ohne eine Lücke in der Anordnung zu verursachen, durch die aufzunehmendes Gut nicht aufgenommen würde.

Wie in den Figuren 3, 4 ersichtlich ist, ist bei der vorteilhaften Anordnung der Antriebe 103, 104, 105 innerhalb der Arbeitsbreite A des jeweiligen Zinkenrotors 12 der jeweils außen befindliche Randzinken 64, 65 so nahe an einem Außenblech bzw. an der jeweiligen Außenwand 66, 67 des Zinkenrotors 12 bzw. der jeweiligen Aufnahmeeinheit 3, 4, 5 angeordnet, dass problemlos ein weiterer Zinkenrotor 12 unmittelbar benachbart angeordnet werden kann, ohne eine Lücke in der Arbeitsbreite zu verursachen. Das bedeutet, dass eine in Figur 4 dargestellte halbe Distanz H, die sich vom Randzinken 64, 65 zur Außenwand 66, 67 erstreckt, durch die Anordnung einer weiteren Aufnahmeeinheit 3, 4, 5 unmittelbar neben der dargestellten Aufnahmeeinheit 3, 4, 5 zu einem realisierten, gesamten Abstand dieser beiden Randzinken 64, 65 führt, der gemäß der Erfindung kleiner oder gleich der durchschnittlichen Länge des Ernteguts ist.

Im dargestellten Ausführungsbeispiel entspricht der realisierte, gesamte Abstand dieser beiden Randzinken 64, 65 im Wesentlichen einem Abstand D von Zinken 18, 21 innerhalb der Zinkenreihe 13 bis 16 und beträgt z.B. ca. 6 cm. Das heißt, dass hier in etwa D = 2 x H ist. Allerdings könnte der gesamte Abstand dieser beiden Randzinken 64, 65 durchaus auch etwas größer ausfallen, ohne dass Funktionsverluste zu befürchten wären bzw. Erntegut auf dem Boden liegen bliebe.

Beispielsweise ist eine Entfernung E von Zinken 18 innerhalb einer Zinkenreihe 13 bis 16 im Bereich des Antriebs 103 bis 105 etwas größer als die Distanz D. Auch hier ist es von Vorteil, die Entfernung E im Wesentlichen kleiner oder gleich der durchschnittlichen Länge des Ernteguts auszubilden.

Grundsätzlich ist vor allem die vorteilhafte Ausbildung des Antriebs 103 der mittleren Aufnahmeeinheit 3 von Vorteil. Die beiden Seiteneinheiten 4, 5 könnten grundsätzlich auch von der Außenseite her angetrieben werden, ohne dass beim Übergang zur mittleren Aufnahmeeinheit 3 ein störendes Getriebe vorläge. Der Antrieb 104, 105 der Seiteneinheiten 4, 5, wie im Ausführungsbeispiel, hat jedoch durchaus ebenfalls konstruktive Vorteile.

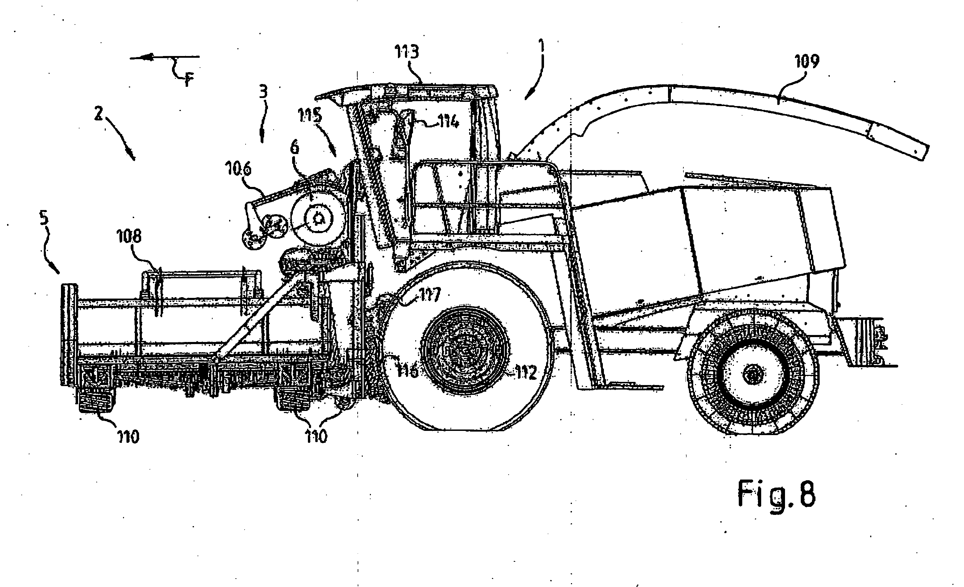

Darüber hinaus wird vor allem in Figur 8 deutlich, dass in der Transportstellung die Einheiten 3 bis 5 und somit deren Schwerpunkt ebenfalls sehr nahe an der Vorderradachse 112 bzw. an der Fahrkabine 113 angeordnet sind. Dementsprechend kompakt ist die Fahrzeugeinheit auch in der Transportphase und zudem wird auch die Achslast der Vorderachse 112 entsprechend minimiert. Weiterhin wird deutlich, dass der nicht näher dargestellte Fahrer in seiner Kabine 113, der etwa in Höhe der abgebildeten Spiegel 114 aus der Kabine 113 blickt, auch in der Transportstellung der Vorrichtung 2 sehr gut die Straße einsehen kann.

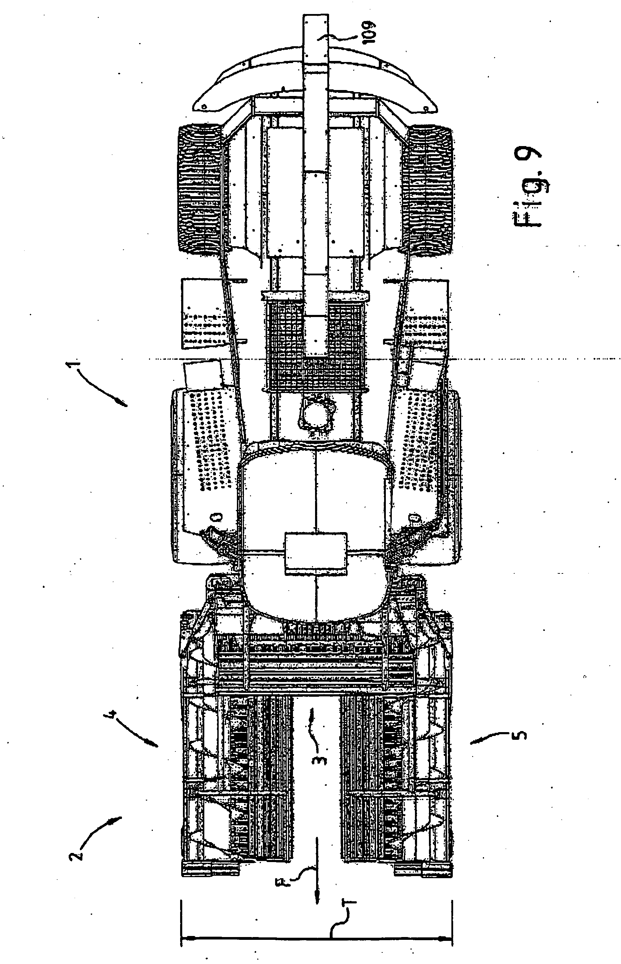

Die Verstellbarkeit der Vorrichtung 2 von der in Figur 1 dargestellten Arbeitsstellung in eine in den Figuren 8 und 9 dargestellte Transportstellung der Vorrichtung 2 wird nachfolgend näher erläutert.

Gemäß der Erfindung weist die Vorrichtung 2 eine Hubmechanik bzw. einen Lift 115 für die zentrale Einheit 3 auf. Der Lift 115 weist vorteilhafterweise zwei Führungsschienen 116 auf, entlang derer die zentrale Einheit 3 im Wesentlichen geradlinig verstellbar angeordnet ist. Ohne nähere Darstellungen sind insbesondere zwei in vorteilhafter Weise synchronisierte Hubeinheiten, insbesondere Hydraulikzylinder, vorgesehen, die die Verstellung der zentralen Einheit 3 längs der Führungsschienen 116 ermöglichen. Mittels entsprechender hydraulischer Hubkomponenten kann mit bei bereits handelsüblichen Feldhäckslern 1 vorhandenen Hydraulikkupplungen die entsprechende Hebe- und/oder Senkearbeit umgesetzt werden.

Bei den dargestellten Führungsschienen 116 handelt es sich im Wesentlich um etwa U-förmige Führungsschienen 116, die vor allem eine Wälzlagerführung, aber auch zum Teil eine Gleitführung der zentralen Einheit 3 realisieren. Grundsätzlich ist ein Gleichlauf bei der Verwendung zweier Hubsysteme bzw. Hydraulikzylinder gerade bei derart großen bzw. schweren Einheiten 3 bis 5 von großem Vorteil. Dies kann beispielsweise mittels einer hydraulischen und/oder einer elektronischen Kopplung realisiert werden. Mit der Verwendung von Hydraulikzylindern oder dergleichen können diese innerhalb der Führungsschienen 116 angeordnet werden, was eine besonders Platz sparende Bauweise ermöglicht.

Im Vergleich der beiden Figuren 2 und 8 wird deutlich, dass der Feldhäcksler 1 eine um eine Drehachse drehbare Schwinge 117 aufweist, an die die Vorrichtung 2 in vorteilhafter Weise angekoppelt ist. Die Schwinge 117 ist bereits bei handelsüblichen Feldhäcksern 1 wie beim bereits erwähnten "JAGUAR" der Anmelderin vorhanden und weist neben Hydraulikanschlussmöglichkeiten auch wenigstens eine Kopplungsstelle zur Übertragung rotatorischer Energie, eine sogenannte Zapfwelle oder dergleichen, auf. Mittels dieser Zapfwelle wird insbesondere der Antrieb der Pick-Up 100 bis 102 sowie der Querförderschnecken 6 bis 8 einschließlich des Einzugs 9 realisiert.

Um die vertikale Verstellung der zentralen Einheit 3 zu realisieren, weist der nicht näher dargestellte Antrieb eine Längenveränderung auf. Beispielsweise eine Klauenkupplung oder dergleichen, die in der Transportstellung außer Eingriff ist, und/oder eine teleskopierbare Antriebswelle.

Die Verfahrensschritte um von der Arbeitsstellung gemäß Figur 1 in die Transportstellung gemäß Figur 8 zu gelangen erfolgt im Wesentlichen in der Weise:

Im Allgemeinen wird die Schwinge 117 des Feldhäckslers 1 unmittelbar nach der Beendigung der Erntegutaufnahme angehoben, so dass die gesamte Vorrichtung 2 vom Boden abhebt, d.h. dass die Stützräder 110 bzw. die Gleitstützen 111 nicht mehr Kontakt zum Boden haben. Hierdurch werden die Führungsschienen 116 im dargestellten Ausführungsbeispiel in nahezu vertikaler Orientierung ausgerichtet.

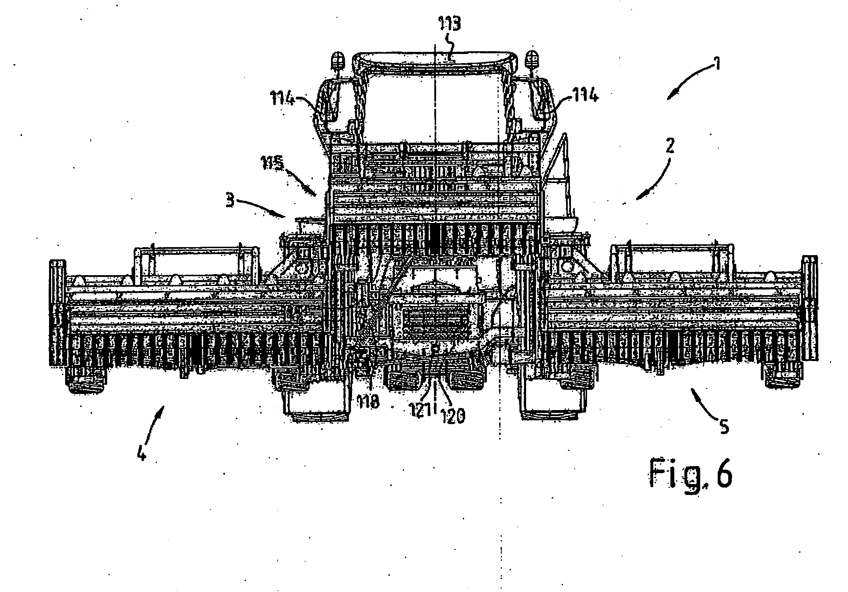

Anschließend wird die zentrale Einheit 3 längs der Führungsschienen 116 nach oben verstellt, wie dies vor allem in Figur 6 deutlich wird. In dieser Figur werden weitere Komponenten der Vorrichtung 2 sichtbar. Hierzu gehört eine längenveränderbare Antriebswelle 118 sowie eine außer Eingriff gesetzte Klauenkupplung 119. Weiterhin werden Einzugswalzen 120 des Feldhäckslers 1 für das Erntegut sichtbar. Darüber hinaus wird auch eine Schwenkachse 121 sichtbar, um die die gesamte Vorrichtung 2 zum Ausgleich von Unebenheiten des Bodens relativ zum Fahrzeug verschwenken kann. Beispielsweise wird eine Pendelbewegung von insgesamt etwa 10° realisiert.

In Figur 6 ist die zentrale Einheit bis zum maximalen Punkt angehoben, so dass nachfolgend die beiden Seiteneinheiten 4 und 5 jeweils um eine Schwenkachse 122 verschwenkt werden können. Hierfür sind vorteilhafte Antriebe bzw. hydraulische Zylinder 123 vorgesehen.

Die beiden Seiteneinheiten 4 und 5 verschwenken im Wesentlichen bis diese etwa in Fahrtrichtung ausgerichtet sind. Hierbei weist die Vorrichtung 2, wie in Figur 9 ersichtlich, eine Transportbreite T auf, die im Wesentlichen der Fahrzeugbreite bzw. der maximal zulässigen Breite entspricht. Anschließend kann die zentrale Einheit bei Bedarf etwas abgesenkt werden, bis diese vorzugsweise mittels entsprechender Anschlagelemente auf den beiden Seitenteilen 4 und 5 aufsetzen. Hierdurch wird eine besonders kompakte und stabile Anordnung der großen und schweren Einheiten 3 bis 5 in der Transportphase realisiert.

Darüber hinaus kann in der Transportstellung beispielsweise stirnseitig eine an den beiden Seiteneinheiten 4 und 5 angeordnete Verriegelungsstange bzw. ein Verriegelungselement vorgesehen werden, so dass ein unbeabsichtigtes Aufschwenken der beiden Seiteneinheiten 4 oder 5 während der Fahrt sicher verhindert wird. Dies erhöht die Sicherheit in der Transportphase.

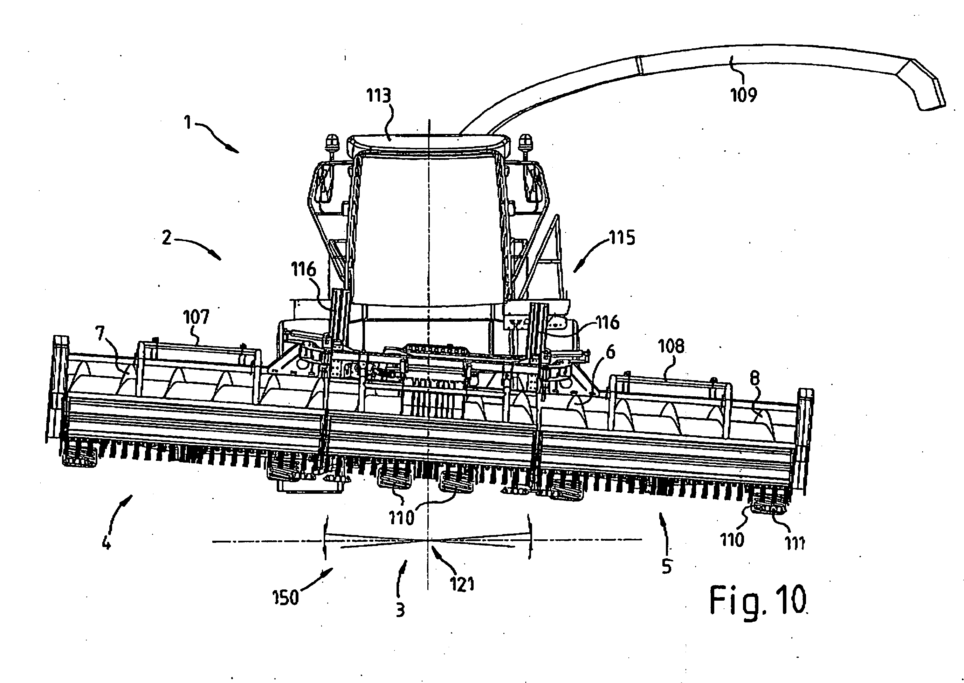

In Figur 10 wird das Pendeln der Vorrichtung 2 gemäß der Erfindung um die Schwenkachse 121 verdeutlicht. Unterhalb der Vorrichtung 2 der Figur 10 ist schematisch die Pendelbewegung 150 zum besseren Verständnis skizziert. Die Pendelbewegung 150 verdeutlicht, dass die Vorrichtung 2 um die Schwenkachse 121 schwenkbar ist, die zweifelsohne zentral in der Vorrichtung 2 gemäß Figur 6 angeordnet ist und nicht wie abgebildet unterhalb der Vorrichtung 2 um einen bestimmten Betrag pendeln kann. Die Ruhestellung der Vorrichtung 2 ist bei der Pendelbewegung 150 als Strichpunktlinie schematisch skizziert. Der gesamte Pendelausschlag beträgt etwa ca. 10°, d.h. etwa zweimal 5°. Es hat sich gezeigt, dass eine derartige Schrägstellung der Vorrichtung 2 in Bezug zum Fahrzeug 1 im Allgemeinen ausreichend ist.

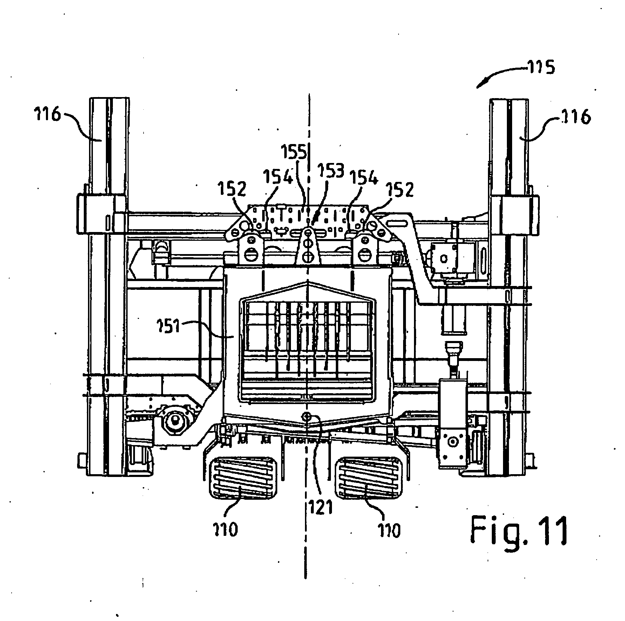

In Figur 11 wird verdeutlicht, wie die Pendelung 150 realisiert wird. Hierbei ist ein Rahmen 151 vorgesehen, der starr mit dem Feldhäcksler 1 bzw. dem Fahrzeug über eine entsprechende Kopplungsvorrichtung verbindbar ist und die Schwenkachse 129 aufweist. Weiterhin weist der Rahmen 151 zwei Tragrollen 152 auf bzw. eine zusätzliche Stütze 153, die beim Ausschwenken der Vorrichtung 2 um die Schwenkachse 121 entsprechend an einen linken bzw. einen rechten Anschlag 154 anschlagen. Hierdurch wird die maximale Auslenkung für den Bodenausgleich definiert. Das bedeutet, dass ein Tragrahmen 155 beweglich in Bezug zum Fahrzeug bzw. zum Feldhäcksler 1 ausgebildet ist. Am Tragrahmen 155 ist insbesondere auch der Lift 115 bzw. die Führungsschienen 116 fixiert, längs derer die zentrale Einheit 3 entsprechend translatorisch verstellbar ist. Ohne nähere Darstellung sind auch am Tragrahmen 155 die beiden Seiteneinheiten 4 und 5 fixiert. In den Figuren 1, 10 ist ein Einzug 9 dargestellt, der sternförmige Förderelemente aufweist. Hier werden die von rechts und links kommenden Erntegutströme zu den Einzugswalzen 120 entgegen der Fahrtrichtung befördert bzw. gepresst.

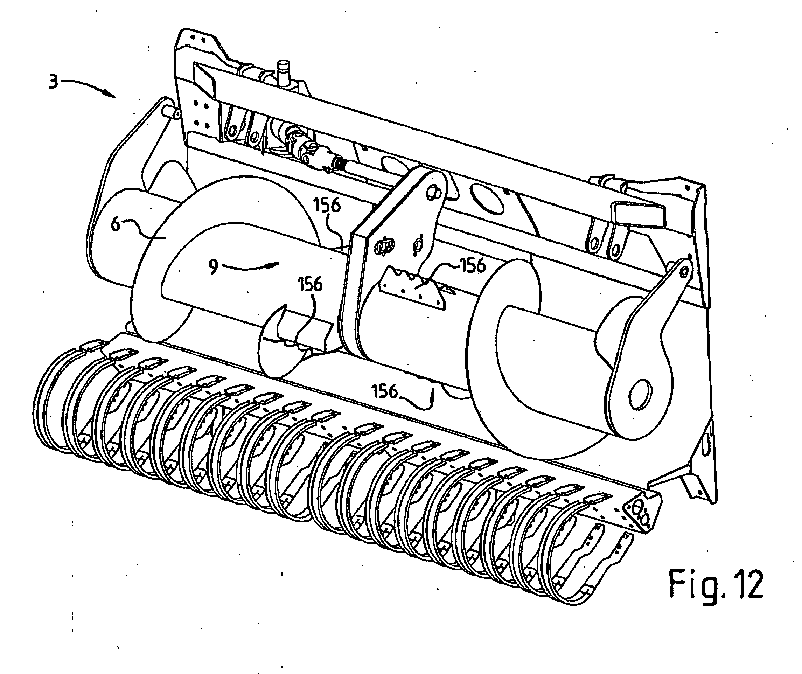

Dagegen ist in Figur 12 eine alternative Ausführungsform des Einzugs 9 schematisch dargestellt, wobei der Einzug 9 mehrere Paddel 156 aufweist, die von rechts und von links kommenden Erntegutströme entgegen der Fahrtrichtung F umlenken bzw. in Richtung des Fahrzeugs 1 befördern. Es hat sich gezeigt, dass ein derartiger Einzug 9 mit vorteilhaften Förderelementen, insbesondere den Paddeln 156, ein Verstopfen bzw. ein Stau im Bereich des Einzugs 9 wirkungsvoll vermeidet und eine effiziente Weiterleitung der zum Teil enorm großen Erntegutströme zum Häcksler ermöglicht.

### Bezugszeichenliste:

| | | | |
|---|---|---|---|
| 1 | Feldhäcksler | 104 | Antrieb |
| 2 | Vorrichtung | 105 | Antrieb |
| 3 | zentrale Einheit | 106 | Halter |
| 4 | Seiteneinheit | 107 | Halter |
| 5 | Seiteneinheit | 108 | Halter |
| 6 | Querförderschnecke | 109 | Auswurf |
| 7 | Querförderschnecke | 110 | Stützrad |
| 8 | Querförderschnecke | 111 | Gleitstütze |
| 9 | Einzug | 112 | Achse |
| 10 | Drehachse | 113 | Kabine |
| 11 | Drehachse | 114 | Spiegel |
| 12 | Zinkenrotor | 115 | Lift |
| 13 | Zinkenreihe | 116 | Schiene |
| 14 | Zinkenreihe | 117 | Schwinge |
| 15 | Zinkenreihe | 118 | Welle |
| 16 | Zinkenreihe | 119 | Kupplung |
| 17 | Abstreifschlitz | 120 | Walzen |
| 18 | Zinken | 121 | Achse |
| 19 | Schlitz | 122 | Achse |
| 20 | Führung | 123 | Zylinder |
| 21 | Federzinken | 150 | Pendelung |
| 22 | U-Profil | 151 | Rahmen |
| 23 | Drehachse | 152 | Rollen |
| 24 | verbindungselement | 153 | Stütze |
| 25 | Transmissionsgetriebe | 154 | Anschlag |
| 64 | Randzinken | 155 | Tragrahmen |
| 65 | Randzinken | 156 | Paddel |
| 66 | Außenwand | A | Arbeitsbreite |
| 67 | Außenwand | D | Distanz |
| 100 | Pick-Up | E | Entfernung |
| 101 | Pick-Up | F | Fahrtrichtung |
| 102 | Pick-Up | H | Halbe Distanz |
| 103 | Antrieb | T | Transportbreite |
| | | W | Gesamt-Arbeitsbreite |

## Patentansprüche

1. Erntevorsatzvorrichtung (2) zur frontseitigen Anordnung an einem landwirtschaftlichen Fahrzeug (1) und zum Aufnehmen von am Boden liegendem Erntegut wie Gras, Heu, Silage, Stroh, Luzerne oder dergleichen, wobei wenigstens zwei Aufnahmeeinheiten (3, 4, 5) vorgesehen sind, die jeweils wenigstens eine Mehrzahl über deren Arbeitsbreite (A) verteilter und in Arbeitsstellung um eine quer zur Fahrtrichtung (F) ausgerichtete Drehachse (11, 23) umlaufender sowie voneinander beabstandeter Aufnahmeelemente (18, 21) aufweisen, wobei die quer zur Fahrtrichtung ausgerichtete Gesamtbreite (W) der Aufnahmeeinheiten (3, 4, 5) in Arbeitsstellung größer als die quer zur Fahrtrichtung ausgerichtete Transportbreite (T) der Vorrichtung (2) in Transportstellung ist, **dadurch gekennzeichnet, dass** in Arbeitsstellung der Abstand der äußeren Aufnahmeelemente (64, 65) zweier benachbarter Aufnahmeeinheiten (3, 4, 5) im Wesentlichen gleich oder kleiner als der größte Abstand (D oder E) zwischen zwei Aufnahmeelementen (18, 21) innerhalb der Arbeitsbreite (A) einer der Aufnahmeeinheiten (3, 4, 5) ist.

2. Vorrichtung nach Anspruch 1, **dadurch gekennzeichnet, dass** in Arbeitsstellung der Abstand (2 x H) der äußerten Aufnahmeelemente (64, 65) von benachbarten Aufnahmeeinheiten (3, 4 ,5) im Wesentlichen zwischen 20 und 150 Millimeter ist.

3. Vorrichtung nach einem der vorgenannten Ansprüche, **dadurch gekennzeichnet, dass** in Arbeitsstellung der Abstand (2 x H) der äußeren Aufnahmeelemente (64, 65) von benachbarten Aufnahmeeinheiten (3, 4, 5) im Wesentlichen zwischen 40 und 90 Millimeter ist.

4. Vorrichtung nach einem der vorgenannten Ansprüche,
**dadurch gekennzeichnet, dass** in Arbeitsstellung der Abstand (2 x H) der äußeren Aufnahmeelemente (64, 65) von benachbarten Aufnahmeeinheiten (3, 4, 5) im Wesentlichen zwischen 50 und 65 Millimeter ist.

5. Vorrichtung nach einem der vorgenannten Ansprüche,
**dadurch gekennzeichnet, dass** in Arbeitsstellung die Aufnahmeeinheiten (3, 4, 5) in Fahrtrichtung (F) betrachtet wenigstens teilweise überlappend angeordnet sind.

6. Vorrichtung nach einem der vorgenannten Ansprüche,
**dadurch gekennzeichnet, dass** in Arbeitsstellung die Aufnahmeeinheiten (3, 4, 5) im Wesentlichen auf einer Höhe bezogen auf die Fahrtrichtung (F) angeordnet sind.

7. Vorrichtung nach einem der vorgenannten Ansprüche,
**dadurch gekennzeichnet, dass** wenigstens eine Verstelleinrichtung (115, 122, 123) zum Verstellen der Aufnahmeeinheiten (3, 4, 5) zwischen der Arbeitsstellung und einer Transportstellung vorgesehen ist.

8. Vorrichtung nach einem der vorgenannten Ansprüche,
**dadurch gekennzeichnet, dass** die Aufnahmeeinheiten (3, 4, 5) in Transportstellung wenigstens teilweise vertikal übereinander angeordnet sind.

9. Vorrichtung nach einem der vorgenannten Ansprüche,
**dadurch gekennzeichnet, dass** wenigstens drei Aufnahmeeinheiten (3, 4, 5) vorgesehen sind.

10. Vorrichtung nach einem der vorgenannten Ansprüche,
**dadurch gekennzeichnet, dass** die Verstelleinrichtung (115, 122, 123) wenigstens eine Lineareinheit (115) zur im Wesentlichen geradlinigen Translation wenigstens einer der Aufnahmeeinheiten (3, 4, 5) aufweist.

11. Vorrichtung nach einem der vorgenannten Ansprüche,
**dadurch gekennzeichnet, dass** wenigstens eine Querfördereinheit (6, 7, 8) zum wenigstens teilweise quer zur Fahrtrichtung (F) gerichteten Fördern des Ernteguts vorgesehen ist.

12. Vorrichtung nach einem der vorgenannten Ansprüche,
**dadurch gekennzeichnet, dass** die Querfördereinheit (6, 7 ,8) wenigstens eine in Arbeitsstellung um eine im Wesentlichen horizontal und quer zur Fahrtrichtung (F) ausgerichtete Rotationsachse (10) rotierende Förderschnecke (6, 7, 8) aufweist.

13. Vorrichtung nach einem der vorgenannten Ansprüche,
**dadurch gekennzeichnet, dass** in Arbeitsstellung Rotationsachsen (10) von wenigstens zwei Querfördereinheiten (6, 7, 8) im Wesentlichen fluchtend ausgerichtet sind.

14. Vorrichtung nach einem der vorgenannten Ansprüche,
**dadurch gekennzeichnet, dass** die Querfördereinheit (6, 7, 8) wenigstens eine Umlenkeinheit (9) zum Umlenken und Fördern des Ernteguts entgegen die Fahrtrichtung (F) aufweist.

15. Vorrichtung nach einem der vorgenannten Ansprüche,
**dadurch gekennzeichnet, dass** die Umlenkeinheit (9) wenigstens ein um eine Antriebsachse (10) drehendes Förderelement (156) aufweist.

16. Vorrichtung nach einem der vorgenannten Ansprüche,
**dadurch gekennzeichnet, dass** die Umlenkeinheit (9) mehrere,
um die Antriebsachse (10) drehende Förderelemente (156) umfasst.

17. Vorrichtung nach dem Oberbegriff des Anspruchs 1,
**dadurch gekennzeichnet, dass** wenigstens eine im Wesentlichen in Fahrtrichtung (F) ausgerichtete Schwenkachse (121) zum gemeinsamen Verschwenken von wenigstens zwei der Aufnahmeeinheiten (3, 4, 5) vorgesehen ist.

18. Vorrichtung nach einem der vorgenannten Ansprüche,
**dadurch gekennzeichnet, dass** die Schwenkachse (121) zum gemeinsamen Verschwenken aller Aufnahmeeinheiten (3, 4, 5) ausgebindet ist.

19. Vorrichtung nach einem der vorgenannten Ansprüche,
**dadurch gekennzeichnet, dass** wenigstens eine die Schwenkachse (121) aufweisende Kopplungsvorrichtung (151) zum Koppeln mit dem Fahrzeug (1) vorgesehen ist.

20. Landwirtschaftliches Fahrzeug (1) mit einem Antriebsmotor zum Antreiben wenigstens eines.Laufrades,
**dadurch gekennzeichnet, dass** eine Vorrichtung (2) nach einem der vorgenannten Ansprüche in Fahrtrichtung (F) betrachtet vor dem angetriebenen Laufrad angeordnet ist.

21. Landwirtschaftliches Fahrzeug (1) nach dem vorgenannten Anspruch, **dadurch gekennzeichnet, dass** wenigstens eine Hebeeinheit zum Anheben der Vorrichtung (2) in der Transportstellung vorgesehen ist.

22. Landwirtschaftliches Fahrzeug (1) nach einem der vorgenannten Ansprüche, **dadurch gekennzeichnet, dass** eine Häckselvorrichtung zum Häckseln des Ernteguts vorgesehen ist.

## Claims

1. Harvesting attachment device (2) to be arranged on the front of an agricultural vehicle (1) and for lifting a harvest such as grass, hay, silage, straw, alfalfa or the like from the ground, wherein at least two mounting units (3, 4, 5) are provided, which respectively comprise at least a plurality of spaced apart mounting elements (18, 21) distributed over its operating width (A) and in operating position rotating about a rotary axis (11, 23) aligned perpendicular to the travelling direction (F), whereby the overall width (W) of the mounting units (3, 4, 5) aligned at right angles to the travelling direction is greater in operating position than the transport width (T) of the device (2) in transport position aligned at right angles to the travelling direction, **characterised in that** in operating position the distance of the outer mounting elements (64, 65) of two adjacent mounting units (3, 4, 5) is substantially equal to or less than the greatest distance (D or E) between two mounting elements (18, 21) within the operating width (A) of one of the mounting units (3, 4, 5).

2. Device according to claim 1, **characterised in that** in operating position the distance (2 x H) of the outer mounting elements (64, 65) from adjacent mounting units (3, 4, 5) is essentially between 20 and 150 millimetres.

3. Device according to one of the preceding claims, **characterised In that** in operating position the distance (2 x H) of the outer mounting elements (64, 65) from adjacent mounting units (3, 4, 5) Is essentially between 40 and 90 millimetres.

4. Device according to one of the preceding claims, **characterised In that** in operating position the distance (2 x H) of the outer mounting elements (64, 65) from adjacent mounting units (3, 4, 5) Is essentially between 50 and 65 millimetres.

5. Device according to one of the preceding claims, **characterised in that** in operating position the mounting units (3, 4, 5) are arranged to be at least partly overlapping as viewed in travelling direction (F).

6. Device according to one of the preceding claims, **characterised in that** in operating position the mounting units (3, 4, 5) are arranged substantially at one height in relation to the travelling direction (F).

7. Device according to one of the preceding claims, **characterised in that** at least one adjusting device (115, 122, 123) Is provided for adjusting the mounting units (3, 4, 5) between the operating position and a transport position.

8. Device according to one of the preceding claims, **characterised in that** the mounting units (3, 4, 5) are arranged to be at least partly vertical above one another in transport position.

9. Device according to one of the preceding claims, **characterised in that** at least three mounting units (3, 4, 5) are provided.

10. Device according to one of the preceding claims, **characterised in that** the adjusting device (115, 122, 123) comprises at least one linear unit (115) for the substantially linear translation of at least of one of the mounting units (3, 4, 5).

11. Device according to one of the preceding claims, **characterised in that** at least one transverse conveying unit (6, 7, 8) is provided for conveying the harvest at least party transversely to the travelling direction (F).

12. Device according to one of the preceding claims, **characterised in that** the transverse conveying unit (6, 7, 8) comprises at least one conveying screw (6, 7, 8) rotating in operating position about a rotation axis (10) aligned substantially horizontally and transversely relative to the travelling direction (F).

13. Device according to one of the preceding claims, **characterised in that** in operating position rotation axes (10) of a least two transverse conveying units (6, 7, 8) are aligned to be substantially In alignment with one another.

14. Device according to one of the preceding claims, **characterised in that** the transverse conveying unit (6, 7, 8) comprises at least one guiding unit (9) for guiding and conveying the harvest opposite the travelling direction (F).

15. Device according to one of the preceding claims, **characterised in that** the guiding unit (9) comprises at least one conveying element (156) rotating about a drive axis (10).

16. Device according to one of the preceding claims, **characterised in that** the guiding unit (9) comprises several conveying elements (156) rotating about the drive axis (10).

17. Device according to the preamble of claim 1, **characterised in that** at least one pivot axis (121) aligned substantially in travelling direction (F) is provided for the Joint pivoting of at least two of the mounting units (3, 4, 5).

18. Device according to one of the preceding claims, **characterised in that** the pivot axis (121) is designed for the joint pivoting of all mounting units (3, 4, 5).

19. Device according to one of the preceding claims, **characterised in that** at least one coupling device (151) comprising the pivot axis (121) is provided for coupling with the vehicle (1).

20. Agricultural vehicle (1) with a drive motor for driving at least one running wheel, **characterised in that** a device (2) according to one of the preceding claims is arranged in front of the driven running wheel as viewed in travelling direction (F).

21. Agricultural vehicle (1) according to the preceding claim, **characterised in that** at least one lifting unit is provided for lifting the device (2) in the transport position.

22. Agricultural vehicle (1) according to one of the preceding claims, **characterised in that** a chopping device is provided for chopping the harvest.

## Revendications

1. Dispositif de récolte adaptable (2) destiné à être disposé à l'avant d'un engin agricole (1) et à ramasser une récolte au sol telle que de l'herbe, du foin, de l'ensilage, de la paille, de la luzerne ou analogue, dans lequel est prévu au moins deux unités de ramassage (3, 4, 5) qui présentent chacune, répartis sur leur largeur de travail (A), une pluralité d'éléments de ramassage (18, 21) situés à distance les uns des autres et, en position de travail, tournant autour d'un axe de rotation (11, 23) orienté perpendiculairement au sens de la marche (F), la largeur totale (W) des unités de ramassage (3, 4, 5) en position de travail et perpendiculairement au sens de la marche étant supérieure à la largeur de transport (T) du dispositif (2) en position de transport et perpendiculairement au sens de la marche,
**caractérisé en ce que**, en position de travail, la distance entre les éléments de ramassage extérieurs (64, 65) de deux unités de ramassage adjacentes (3, 4, 5) est sensiblement identique ou inférieure à la plus grande distance (D ou E) entre deux éléments de ramassage (18, 21) à l'intérieur de la largeur de travail (A) de l'une des unités de ramassage (3, 4, 5).

2. Dispositif selon la revendication 1,
**caractérisé en ce que**, en position de travail, la distance (2 x H) entre les éléments de ramassage extérieurs (64, 65) des unités de ramassage adjacentes (3, 4, 5) est sensiblement comprise entre 20 et 150 millimètres.

3. Dispositif selon l'une des revendications précédentes,
**caractérisé en ce que**, en position de travail, la distance (2 x H) entre les éléments de ramassage extérieurs (64, 65) des unités de ramassage adjacentes (3, 4, 5) est sensiblement comprise entre 40 et 90 millimètres.

4. Dispositif selon l'une des revendications précédentes,
**caractérisé en ce que**, en position de travail, la distance (2 x H) entre les éléments de ramassage extérieurs (64, 65) des unités de ramassage adjacentes (3, 4, 5) est sensiblement comprise entre 50 et 65 millimétrés.

5. Dispositif selon l'une des revendications précédentes,
**caractérisé en ce que**, en position de travail, les unités de ramassage (3, 4, 5) sont agencées de façon à se chevaucher au moins partiellement, vu dans le sens de la marche (F).

6. Dispositif selon l'une des revendications précédentes,
**caractérisé en ce que**, en position de travail, les unités de ramassage (3, 4, 5) sont agencées essentiellement en hauteur par rapport au sens de la marche (F).

7. Dispositif selon l'une des revendications précédentes,
**caractérisé en ce qu'**il est prévu au moins un dispositif de réglage (115, 122, 123) pour régler les unités de ramassage (3, 4, 5) entre la position de travail et la position de transport.

8. Dispositif selon l'une des revendications précédentes,
**caractérisé en ce que** les unités de ramassage (3, 4, 5) en position de transport sont agencées au moins partiellement les unes au-dessus des autres dans le sens vertical.

9. Dispositif selon l'une des revendications précédentes,
**caractérisé en ce qu'**il est prévu au moins trois unités de ramassage (3, 4, 5).

10. Dispositif selon l'une des revendications précédentes,
**caractérisé en ce que** le dispositif de réglage (115, 122, 123) présente au moins une unité linéaire (115) pour le déplacement sensiblement rectiligne d'au moins une des unités de ramassage (3, 4, 5).

11. Dispositif selon l'une des revendications précédentes,
**caractérisé en ce qu'**il est prévu au moins une unité de transport transversal (6, 7, 8) pour transporter la récolte au moins partiellement transversalement au sens de la marche (F).

12. Dispositif selon l'une des revendications précédentes,
**caractérisé en ce que** l'unité de transport transversal (6, 7, 8) présente au moins une vis sans fin (6, 7, 8) tournant autour d'un axe de rotation (10) orienté sensiblement horizontalement et perpendiculairement au sens de la marche (F).

13. Dispositif selon l'une des revendications précédentes,
**caractérisé en ce que**, en position de travail, les axes de rotation (10) d'au moins deux unités de transport transversal (6, 7, 8) sont sensiblement alignés.

14. Dispositif selon l'une des revendications précédentes,
**caractérisé en ce que** l'unité de transport transversal (6, 7, 8) présente au moins une unité de renvoi (9) pour renvoyer et transporter la récolte à l'encontre du sens de la marche (F).

15. Dispositif selon l'une des revendications précédentes,
**caractérisé en ce que** l'unité de renvoi (9) présente au moins un élément de transport (156) tournant autour d'un axe d'entraînement (10).

16. Dispositif selon l'une des revendications précédentes,
**caractérisé en ce que** l'unité de renvoi (9) comporte plusieurs éléments de transport (156) tournant autour de l'axe d'entraînement (10).

17. Dispositif selon le préambule de la revendication 1,
**caractérisé en ce qu'**il est prévu au moins un axe de pivotement (121) orienté sensiblement dans le sens de la marche (F) pour faire basculer ensemble au moins deux des unités de ramassage (3, 4, 5).

18. Dispositif selon l'une des revendications précédentes,
**caractérisé en ce que** l'axe de pivotement (121) est conçu pour faire basculer ensemble toutes les unités de ramassage (3, 4, 5).

19. Dispositif selon l'une des revendications précédentes,
**caractérisé en ce qu'**il est prévu au moins un dispositif de couplage (151) présentant l'axe de pivotement (121) pour l'attelage à l'engin (1).

20. Engin agricole (1) comportant un moteur d'entraînement pour l'entraînement d'au moins une roue,
**caractérisé en ce qu'**il est agencé devant la roue porteuse vu dans le sens de la marche (F) un dispositif (2) selon au moins l'une des revendications précédentes.

21. Engin agricole (1) selon la revendication précédente,
**caractérisé en ce qu'**il est prévu au moins une unité de levage pour lever le dispositif (2) en position de transport.

22. Engin agricole (1) selon l'une des revendications précédentes,
**caractérisé en ce qu'**il est prévu un dispositif de hachage pour hacher la récolte.
